# EUROPEAN PATENT SPECIFICATION

(11) **EP 1 441 834 B1**
(45) Date of publication and mention of the grant of the patent: **30.03.2005**
(21) Application number: 02781185.0
(22) Date of filing: 22.09.2002
(51) Int. Cl.: B01D 46/04, B01D 29/66

(54) **METHOD AND DEVICE FOR CLEANING DUST-REMOVING FILTERS**
VERFAHREN UND VORRICHTUNG ZUM ABREINIGEN VON STAUBFILTERN
PROCEDE ET DISPOSITIF DE NETTOYAGE DE FILTRES DE DEPOUSSIERAGE

(30) Priority: 25.10.2001 IT MI20012237
(43) Date of publication of application: 04.08.2004
(73) Proprietor: Messina, Aurelio, I-20095 Cusano Milanino (Milano) (IT)
(72) Inventor: Messina, Aurelio, I-20095 Cusano Milanino (Milano) (IT)
(74) Representative: Dosterschill, Peter, Dr.
(86) International application number: PCT/EP2002/010636
(87) International publication number: WO 2003/035218

(56) References cited:
- EP-A- 0 225 613
- EP-A- 0 922 479
- WO-A-01/58564
- WO-A-91/19922
- FR-A- 1 253 040
- US-A- 3 436 899
- US-A- 4 247 310
- US-A- 4 299 604
- US-A- 4 624 689
- US-A- 5 520 366
- US-A- 5 529 592
- US-A- 5 887 797

## Description

The present invention relates to a method and device for washing dust-removing filters through the use of individual compressed air mini tanks provided with valve with membrane system or with lip gasket, positioned on the head of the sleeve or of the cartridge, operating with a cascade system.

### Background Art

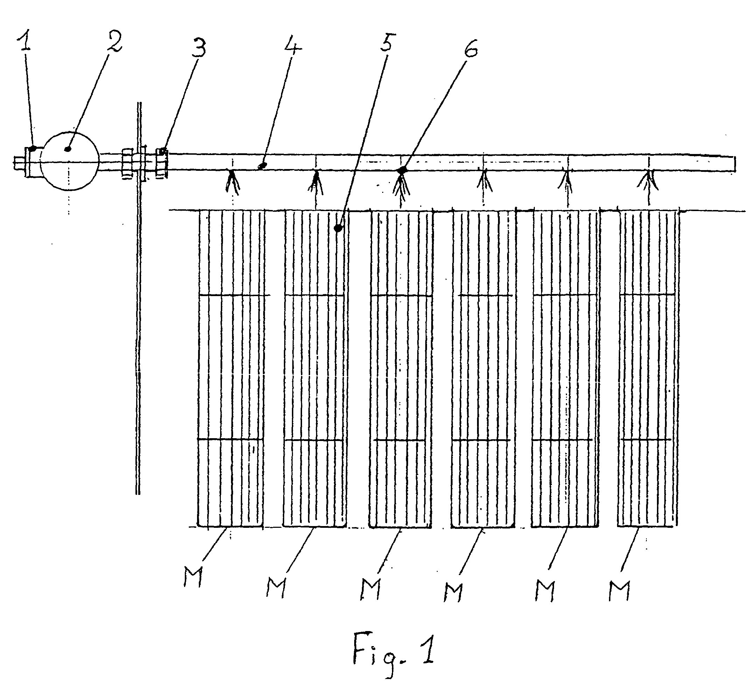

The state of the art illustrated in Fig. 1 in the current construction of dust-removing filters with sleeves or cartridge is embodied by a very complex system with very low energy efficiency.

The system comprises (Fig. 1) a round or square tank 2 normally with diameter of 5" - 6" - 8" - 10" having mounted aboard a number of shooting valves (1) equal to the number of rows of sleeves in the filter.

The solenoid valves have a nominal diameter that can range from ¾" to 2" or 3".

The solenoid valves (or pneumatic servo-controls remotely commanded by a pilot solenoid valves) draw compressed air from the tank (2) and through appropriate airtight through-wall fittings (3) insert a jet of compressed air into the ejector/distributor tube (3) that normally has the diameter of the shooting valves and that has a number of radial holes oriented towards the sleeves equal to the number of sleeves per row (6).

The solenoid valves are normally commanded cyclically by an electronic programmer that regulates its shooting time and the interval between a shot and the subsequent one.

The system described above has considerable drawbacks.

For each design it is necessary to procure a certified tank depending on the type of filter; moreover, there is a very high number of variable such as tank diameter, the diameter of the mounted valves, the number of the mounted valves, the pitch between the mounted valves and more.

An additional drawback is the need to enter the filter with numerous through-wall fittings that are very expensive, large, airtight and with a number equal to the rows of sleeves, as well as the considerable consumption of compressed air since it is clear and evident that shooting a jet of compressed air into a tube with closed bottom (ejector/distributor 4) and using its radial outlets is a process that has very poor efficiency, and the pressure drop and the consequent energy loss is very high.

Another disadvantage consists in the fact that the ejector/distributor tube (4) does not distribute the pressure homogeneously along its length; hence, the sleeves (normally 6 - 10 - 14 per row) are not washed in the same way by the radial air 6: some are washed properly, while others remain partially dirty.

For homogeneous washing, therefore, it is necessary to boost the operating pressure with an additional cost due to a further consumption of compressed air and the hazard that the sleeves may break.

In addition to the above considerations, it should also be noted that the shooting valves (1) through the ejector/distributor tube (4) wash a row of sleeves (5), so that the washing pressure that exits simultaneously from the various sleeves goes to involve and interact with the sleeves of the same row, thereby worsening the result of the washing process.

The present invention has the task of overcoming the drawbacks described above.

### DESCRIPTION OF THE INVENTION

The main concept of the present invention consists of positioning above each sleeve (or cartridge) a mini tank of pneumatic energy (compressed air) similar to an explosive charge, ready to operate on the head of the filtering sleeve triggered in cascade fashion (domino effect) by an external signal (filter clogging signal), wherein each tank is provided with a valve with membrane system or with lip gasket.

The method of the invention does not need an external tank, so that the manufacturer no longer needs interventions by external companies specialised in the construction of certified pressurised tanks. An appropriate procurement of the standard mini tanks in question provides the manufacturer with the capability of designing and finishing his own filter with a single standard product from his warehouse, regardless of the dimensions of the filter itself.

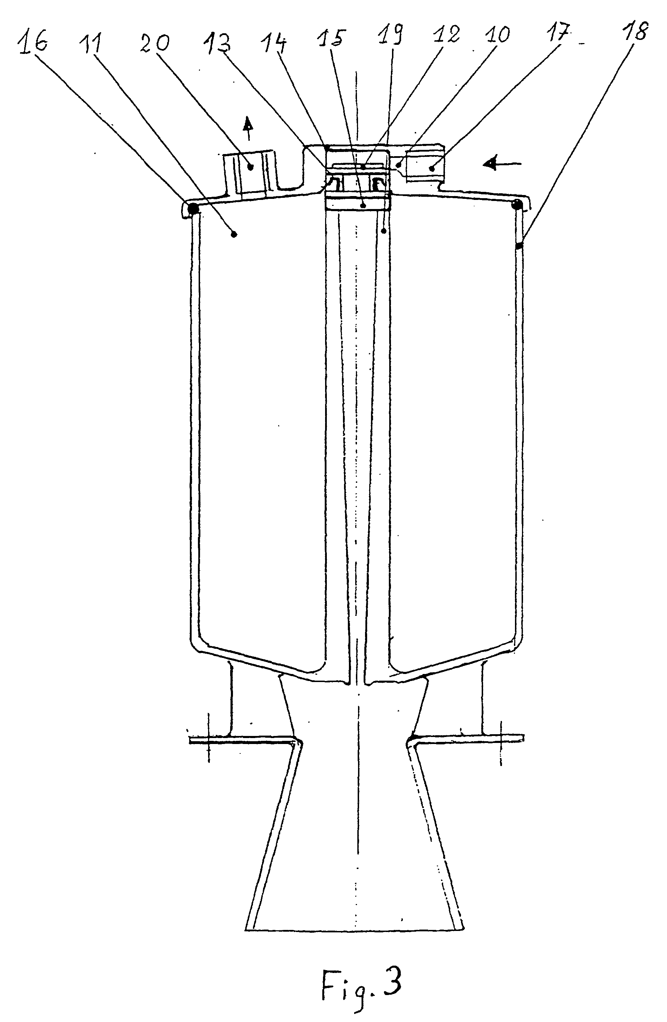

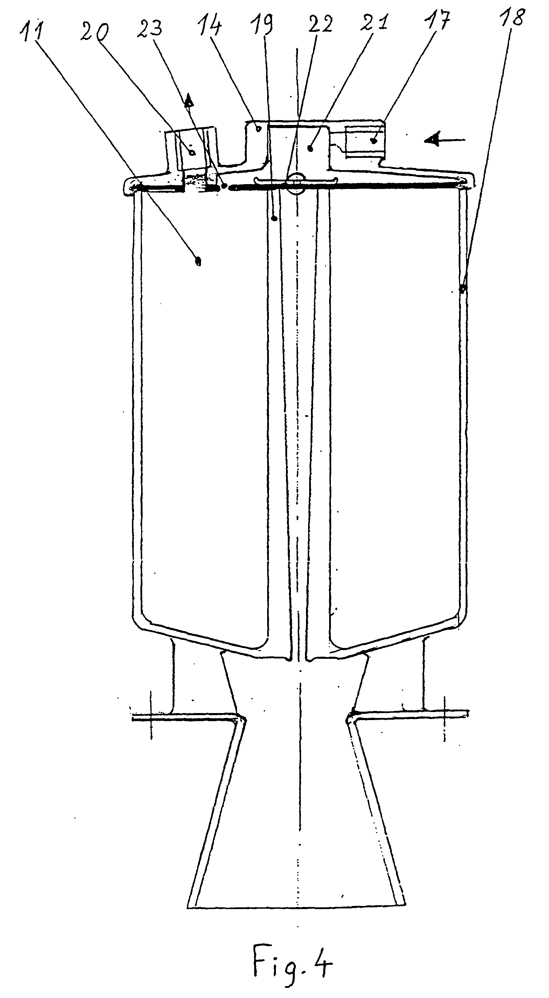

The filter is entered with a single through-plate fitting of small size (1/4" - ½") to supply compressed air to the various standard MINI tanks connected in series (Figs. 3 and 4).

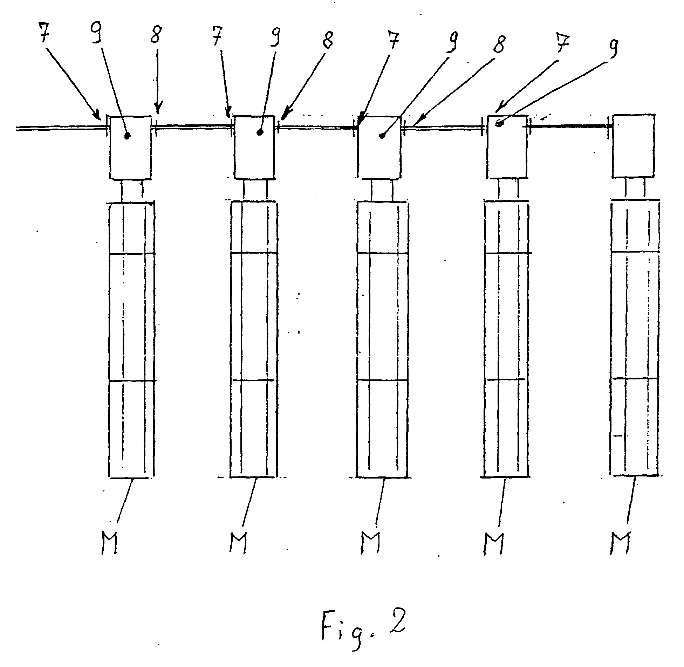

Compressed air consumption is considerably lower; in the case of the application of the standard MINI tanks we have a charge of pneumatic energy (compressed air) positioned above the sleeve (M) (or cartridge) ready to be employed, as per Fig. 2. When the standard MINI tank executes the shooting operation, the compressed air meets no obstacles, and it is conveyed in a long conical tube (19) which considerably increases its velocity and it is then shot into the sleeve through a Venturi system that draws additional air, aspirated from the exterior, into the system. With a small quantity of compressed air, excellent washing results are achieved.

Since each sleeve has its own independent washing system and always operates in cascade fashion so that a sleeve never operates simultaneously with another one, the sleeves are washed in 100 % homogeneous manner and, in fact, the washing pressure can easily be optimised with considerable energy savings, as per Fig. 2.

The operation of the standard mini tanks mounted above each sleeve of the filter is as follows:

During the charging phase, the compressed air supply is introduced into the system through the supply tube (7) that through the outlet (8) feeds the second standard mini tank through the supply tube (7) and through the outlet (8) feeds the next mini tank tube (7) and so on for the required number of standard mini tanks necessary to construct the filter and hence with a number that is identical to that of the sleeves.

In essence, each of the sleeves of the filters has the standard mini tank mounted in its vertical and all these devices are mutually connected in series by unit, tens or hundreds of elements.

On an external signal (filter clogging signal), pressure is removed from the supply tube (7), which is brought down to atmospheric pressure (through a 3-way valve).

The chamber (9) by means of the operating system of the standard mini tank (explained farther on) is brought to atmospheric pressure, which induces the same effect in cascade fashion to the additional chambers (9).

The compressed air contained in the standard mini tanks is shot into the underlying sleeves with a cascade sequence.

It is possible to construct the inserted valve of the standard mini tank (Figs. 3 and 4) with a lip gasket system serving as a one-way pneumatic valve or with an appropriately manufactured membrane.

The operation of the system with lip gasket, as per Fig. 3, is as follows:
through the supply hole (17) compressed air is injected into the chamber (10) which, through the lip gasket (13), with unidirectional tightness, pressurises the compressed air accumulation chamber (11); the initial pressure difference between the chambers (10) and the compressed air accumulation chamber (11) causes the cap (12) to be pressed onto the crown (19) with the seal provided by the gasket (15); the seal between the cover (14) and the body (18) is provided by the gasket (16).

The pressure drop (down to atmospheric pressure, normally achieved with a 3-way valve) in the supply tube (17) causes the upward stroke of the cap (12), so that the pressure of the tank 11 violently exits through the conical crown (19).

Since the mini tank 11 is also under atmospheric pressure and is also connected in cascade fashion, (in series) through the attachment (20) with the subsequent mini tank, all the mini tanks connected will shoot into the filtering sleeves the compressed air they contain, with a small time interval between an emptying operation and the subsequent one.

The operation of the system with membrane, as per Fig. 4, is as follows:
through the hole (17) compressed air is injected into the supply chamber (21) which through the passage (23) pressurises the accumulation chamber (11);
the initial pressure difference between the supply chamber (21) and accumulation chamber 11 causes the membrane (22) to be pressed onto the crown (19);
the seal between the cover (14) and the body (18) is achieved with the peripheral part of the membrane (22).

The pressure drop (down to atmospheric pressure, normally achieved with a 3-way valve) in the supply tube (17) causes the upward stroke of the membrane (12), so that the pressure of the tank 11 violently exits through the conical crown (19) and since the mini tank 11 is also under atmospheric pressure and is also connected in cascade fashion, (in series) through the attachment (20) with the subsequent mini tank, all the mini tanks connected will shoot into the filtering sleeves the compressed air they contain, with a small time interval between an emptying operation and the subsequent one.

The present invention has the following advantages:
- ENERGY SAVINGS, since compressed air consumption is considerably lower than in traditional systems;
- STORAGE FLEXIBILITY, since it is no longer necessary to design the certified tank or the ejector tube; it no longer makes any sense to talk of shooting valves; the system is highly modular and it can be applied both for very small and very large filters;
- EFFICIENCY, since each sleeve is absolutely autonomous and independent and the cleaning system is 100 % homogeneous and identical for all sleeves;
- Since all sleeves are washed exactly in the same way and without any interference, between them it is possible easily to find an optimal working pressure, thereby avoiding needless mechanical stresses and consequent breakage at the sleeves.
- MOUNTING is more advantageous, since the entire system is inside the filter, the filter is an independent and flexible box, autonomous, without exterior tanks, or ejector tubes that perforate the filter wall;
- DOMINO EFFECT, i.e. washing system with no need for electronic cyclical programmers. The system is triggered by the filter clogging system that starts the first element which automatically commands the second one, then the third and so on;
- Accumulation tanks external to the filter are no longer necessary. Each sleeve has its own small charge of compressed air positioned over the head of the sleeve and ready to be used (akin to an explosive charge in stand-by);
- The system requires no shooting valves. Speaking of valve diameters or valve type or number of valves no longer makes any sense;
- The system requires no ejector tubes, nozzles, through-wall fittings, airtight systems for the entrance into the filter;
- The system requires no Venturi tubes, since it provides an incorporated Venturi and it also has a very effective system for accelerating air.

## Claims

1. Device for washing dust-removing filters, comprising
- mini tanks (9) of pneumatic energy (compressed air), positioned above sleeves of said filters or cartidges (M),
whereby the mini tanks (9) are individually associated to the filters and are connected in series, and whereby each-mini tank is provided with a valve with a membrance system or with a lip junction, and
- conical tubes (19) provided between the mini tanks (9) and the sleeves or cartridges (M).

2. Device according to claim 1, **characterised in that** a single through-plate fitting (7) is provided for supplying compressed air to the mini tanks (9).

3. Device according to any proceeding claim, **characterised in that** a valve with a lip gasket (13) serving as a pneumatic one-way valve is inserted in a mini tank (9).

4. The device according to claim 3, further comprising
- a first chamber (10) connected to a supply hole (7);
- a second chamber (11) serving as an air accumulation chamber (11),
- a cap (12) and a crown, whereby the initial pressure difference between the first chamber (10) and the second chamber (11) causes the cap (12) to be pressed onto the crown.

5. Method for washing dust-removing filters by means of a device, comprising
- mini tanks (9) of pneumatic energy (compressed air), positioned above sleeves of said filters or cartidges (M),
whereby the mini tanks (9) are individually associated to the filters and are connected in series, and whereby each mini tank is provided with a valve with a membrance system or with a lip junction, and
- conical tubes (19) provided between the mini tanks (9) and the sleeves or cartridges (M),
whereby the performance of the method is started by an external signal which causes compressed air contained in the mini tanks (9) to be shot through the conical tubes (19) to the sleeves of the filters.

6. Method according to claim 5, **characterized in that** the compressed air contained in the mini tanks (9) connected in series is shot to the sleeves of the filters in a cascade sequence.

7. Method according to claims 5 or 6, **characterised in that** during a charging process of a device comprising mini tanks (9) connected in series compressed air is introduced subsequently into the mini tanks.

8. Method according to claims 5, 6 or 7, **characterised in that** in a device comprising a first chamber (10) connected to a supply hole (7), a second chamber (11) serving as an air accumulation chamber , a cap (12) and a crown, compressed air is inserted into the first chamber which through a lip gasket pressurises the second chamber, the initial pressure difference between the first chamber and the second chamber causes a membrance to be pressed onto the crown.

## Patentansprüche

1. Vorrichtung zum Waschen von Staubfiltem mit:
- Kleinbehältern (9) für pneumatische Energie (Pressluft), angeordnet über Hülsen der Filter oder Patronen (M),
wobei die Kleinbehälter (9) individuell den Filtern zugeordnet und in Reihe verbunden sind, und wobei jeder Kleinbehälter mit einem Ventil mit einem Membransystem oder mit einem Lippenkontakt versehen ist, und
- konischen Röhren (19), die zwischen den Kleinbehältern (9) und den Hülsen oder Patronen (M) vorgesehen sind.

2. Vorrichtung nach Anspruch 1,
**dadurch gekennzeichnet,**
**dass** ein einzelnes Plattendurchlassstück (7) für die Zuführung der Pressluft zu den Kteinbehäüern (9) vorgesehen ist..

3. Vorrichtung nach einem der vorhergehenden Ansprüche,
**dadurch gekennzeichnet,**
**dass** ein Ventil mit einer Lippendichtung (13), das als pneumatisches Einwegventil dient, in einen Kleinbehälter (9) eingesetzt ist.

4. Vorrichtung nach Anspruch 1,
weiter aufweisend:
- eine erste Kammer (10), die mit einer Zuführöffnung (7) verbunden ist,
- eine zweite Kammer (11), die als eine Luftsammelkammer (11) dient,
- eine Kappe (12) und einem Sitz, wobei der anfängliche Druckunterschied zwischen der ersten Kammer (10) und der zweiten Kammer (11) die Kappe auf den Sitz presst.

5. Verfahren zum Waschen von Staubfiltern mittels einer Vorrichtung mit:
- Kleinbehältern (9) für pneumatische Energie (Pressluft), angeordnet über Hülsen der Filter oder Patronen (M),
wobei die Kleinbehälter (9) individuell den Filtern zugeordnet und in Reihe verbunden sind, und wobei jeder Kleinbehälter mit einem Ventil mit einem Membransystem oder mit einem Lippenkontakt versehen ist, und
- konischen Röhren (19), die zwischen den Kleinbehältern (9) und den Hülsen oder Patronen (M) vorgesehen sind,
wobei der Ablauf des Verfahrens durch ein externes Signal gestartet wird, das die in den Kleinbehältern (9) enthaltene Pressluft dazu bringt, durch die konischen Röhren (19) in die Hülsen der Filter eingeschossen zu werden.

6. Verfahren nach Anspruch 5,
**dadurch gekennzeichnet,**
**dass** die in den Kleinbehältern (9), die in Reihe verbunden sind, enthaltene Pressluft in die Hülsen der Filter in einer Kaskadenabfolge eingeschossen wird.

7. Verfahren nach Anspruch 5 oder 6,
**dadurch gekennzeichnet,**
**dass** während eines Ladevorgangs einer Vorrichtung mit Kleinbehältern (9), die in Reihe verbunden sind, Pressluft nacheinander folgend in die Kleinbehälter geleitet wird.

8. Verfahren nach den Ansprüchen 5, 6 oder 7,
**dadurch gekennzeichnet,**
**dass** bei einer Vorrichtung mit einer ersten Kammer (10), die mit einer Zuführöffnung (7) verbunden ist, einer zweiten Kammer (11), die als eine Luftsammelkammer (11) dient, einer Kappe (12) und einem Sitz Pressluft in die erste Kammer geleitet wird, die über eine Lippendichtung die zweite Kammer unter Druck setzt,
wobei der anfängliche Druckunterschied zwischen der ersten Kammer und der zweiten Kammer eine Membran auf den Sitz presst.

## Revendications

1. Dispositif de lavage des filtres de dépoussiérage, comprenant
- des microréservoirs (9) d'énergie pneumatique (air comprimé), positionnés au-dessus des manchons desdits filtres ou cartouches (M), moyennant quoi les microréservoirs (9) sont individuellement associés aux filtres et sont raccordés en série, et moyennant quoi chaque microréservoir est équipé d'une vanne dotée d'un système à membrane ou d'un joint à lèvre, et
- des tubes coniques (19) disposés entre les microréservoirs (9) et les manchons ou cartouches (M).

2. Dispositif selon la revendication 1, **caractérisé en ce qu'**un seul raccord à plaques (7) est présent pour alimenter les microréservoirs (9) en air comprimé.

3. Dispositif selon l'une quelconque des revendications précédentes, **caractérisé en ce qu'**une vanne équipée d'un joint à lèvre (13) fonctionnant comme une vanne pneumatique unidirectionnelle est insérée dans un microréservoir (9).

4. Dispositif selon la revendication 3, comprenant également
- une première chambre (10) raccordée à un tube d'alimentation (7) ;
- une deuxième chambre (11) fonctionnant comme une chambre d'accumulation de l'air (11),
- un couvercle (12) et une couronne, moyennant quoi la différence de pression initiale entre la première chambre (10) et la deuxième chambre (11) provoque la pression du couvercle (12) sur la couronne.

5. Procédé de lavage des filtres de dépoussiérage au moyen d'un dispositif comprenant
- des microréservoirs (9) d'énergie pneumatique (air comprimé), positionnés au-dessus des manchons desdits filtres ou cartouches (M),
moyennant quoi les microréservoirs (9) sont individuellement associés aux filtres et sont raccordés en série, et moyennant quoi chaque microréservoir est équipé d'une vanne dotée d'un système à membrane ou d'un joint à lèvre, et
- des tubes coniques (19) disposés entre les microréservoirs (9) et les manchons ou cartouches (M),
moyennant quoi la réalisation du procédé est initiée par un signal externe qui provoque l'envoi de l'air comprimé contenu dans les microréservoirs (9) à travers les tubes coniques (19) dans les manchons des filtres.

6. Procédé selon la revendication 5, **caractérisé en ce que** l'air comprimé contenu dans les microréservoirs (9) raccordés en série est envoyé dans les manchons des filtres en cascade.

7. Procédé selon les revendications 5 ou 6, **caractérisé en ce qu'**au cours du processus de charge d'un dispositif comprenant des microréservoirs (9) raccordés en série, de l'air comprimé est introduit ensuite dans les microréservoirs.

8. Procédé selon les revendications 5, 6 ou 7, **caractérisé en ce que** dans un dispositif comprenant une première chambre (10) raccordée à un tube d'alimentation (7), une deuxième chambre (11) fonctionnant comme une chambre d'accumulation de l'air, un couvercle (12) et une couronne, de l'air comprimé est inséré dans la première chambre à travers laquelle un joint à lèvre pressurise la deuxième chambre, la différence de pression initiale entre la première chambre et la deuxième chambre provoque la pression d'une membrane sur la couronne.
